Europäisches Patentamt

European Patent Office

Office européen des brevets

(19)

(11) Veröffentlichungsnummer: **0 256 283**
B1

(12)

# EUROPÄISCHE PATENTSCHRIFT

(45) Veröffentlichungstag der Patentschrift:
11.04.90

(21) Anmeldenummer: 87109736.6

(22) Anmeldetag: 07.07.87

(51) Int. Cl.⁴: **B60T 8/22**, B60T 8/30

(54) **Fahrzeugbremsanlage.**

(30) Priorität: 07.08.86 DE 3626753

(43) Veröffentlichungstag der Anmeldung:
24.02.88 Patentblatt 88/8

(45) Bekanntmachung des Hinweises auf die Patenterteilung:
11.04.90 Patentblatt 90/15

(84) Benannte Vertragsstaaten:
AT DE NL SE

(56) Entgegenhaltungen:
DE-A- 2 333 125
DE-A- 2 757 911

(73) Patentinhaber: ROBERT BOSCH GMBH, Postfach 50,
D-7000 Stuttgart 1(DE)

(72) Erfinder: Kächele, Heinz, Dipl.-Ing., Schützstrasse 13,
D-7255 Rutesheim(DE)
Erfinder: Schlichenmaier, Andreas, Dipl.-Ing.(FH),
Zaberfeldstrasse 74, D-7129 Zaberfeld 9(DE)

ACTORUM AG

## Beschreibung

### Stand der Technik

Die Erfindung bezieht sich auf eine Fahrzeug-bremsanlage nach der Gattung des Hauptanspruchs. Eine derartige Fahrzeugbremsanlage ist bekannt (VDI-Bericht Nr.515, 1984).

Bei derartigen Fahrzeugbremsanlagen besteht das Problem, daß bei Abbremsung auf stark unterschiedlichen Fahrbahnen links und rechts ein starkes Lenkmoment und ein Moment um die Hochachse des Fahrzeuges auftreten. Die Wirkung des Momentes um die Fahrzeughochachse ergibt eine Fahrzeugdrehung, die hauptsächlich von der Achslastverteilung und vom Achsabstand abhängig ist. Am ungünstigsten verhält sich in einem solchen Fall eine solo gefahrene Sattelzugmaschine.

Bei der bekannten Bauart wird der Bremszylinderdruck des Rades, das auf der Fahrbahn mit hohem Reibwert (Asphalt) läuft, zunächst durch Ansteuern eines Auslaßventils vermindert, um das auftretende Lenkmoment zu reduzieren. Der an die Druckminderung anschließende Druckwiederanstieg an dem genannten Rad ist vom Druckaufbau an dem anderen, auf einer Fahrbahn mit niedrigerem Reibwert laufenden Rad abhängig. Durch diesen Vorgang werden der Druckanstieg und die Druckdifferenz zwischen den Radbremszylindern der Lenkachse begrenzt. Damit wird dann auch das Drehmoment um die Hochachse in Grenzen gehalten. Dabei wird jedoch ein Kompromiß zwischen Bremsweglänge und Drehmomentwirkung um die Fahrzeughochachse eingegangen. Bei solo gefahrenen Sattelzugmaschinen besteht dabei - wie bereits ausgeführt - die Gefahr des Fahrzeugdrehens, während bei Fahrzeugen mit langem Radstand und großer Hinterachslast der Kompromiß zu einer Unterbremsung des Fahrzeuges führt, da der Fahrer in diesem Fall eine größere Bremskraft am auf der Fahrbahn mit hohem Reibwert laufenden Rad beherrschen könnte.

### Vorteile der Erfindung

Dieser Nachteil wird bei der eingangs genannten Fahrzeug-Bremsanlage mit den kennzeichnenden Merkmalen des Hauptanspruchs vermieden und es wird eine bessere Ausnutzung der durch die Fahr-bahngegenheiten möglichen Verzögerung er-reicht. Dadurch wird eine kürzerer Bremsweg erreicht.

### Zeichnung

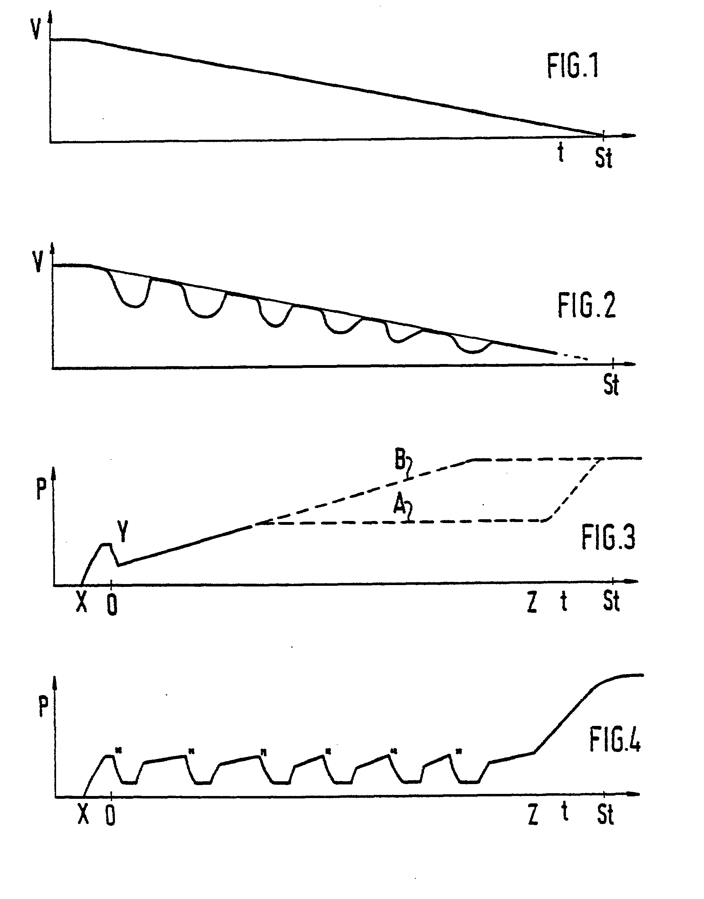

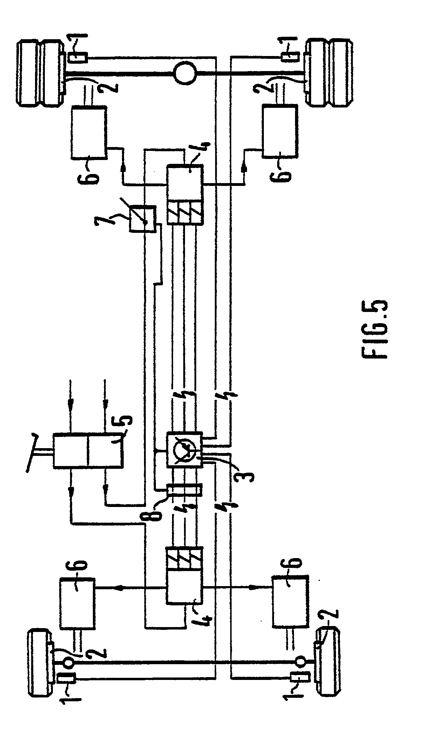

Ein Ausführungsbeispiel der Erfindung ist in der Zeichnung dargestellt und in der nachfolgenden Beschreibung näher erläutert. Die Figuren 1 bis 4 zeigen Kurven der Radgeschwindigkeit und des Bremszylinderdruckes am linken und rechten Vorderrad, wobei die Radgeschwindigkeit V bzw. der Bremszylinderdruck P auf der Ordinate und die Zeit t auf der Abszisse aufgetragen sind und die entsprechenden, zu gleicher Zeit erreichten Werte senkrecht übereinander stehen. Die Figur 5 schließlich zeigt eine Fahrzeugbremsanlage mit dem erfindungsgemäßen Aufbau.

### Beschreibung des Ausführungsbeispiels

Der Bremsbeginn ist mit X, der Druckabbau zur Lenkmomentreduzierung mit Y, und mit Z ist das Ende der Blockierschutzregelung bezeichnet.

Die Figur 1 läßt die beim Bremsen abfallende Radgeschwindigkeit des linken Vorderrades auf Asphalt erkennen bis zum Radstillstand bei St.

In der Figur 2 ist die blockierschutzgeregelte Radgeschwindigkeit des rechten z.B. auf Eis laufenden Vorderrades dargestellt.

Die Figur 3 zeigt nun die eigentliche Erfindung, und zwar den giermomentgeregelten Bremsdruck des linken Vorderrades. Es ist zu erkennen, daß der Bremsdruck bei geringer Hinterachslast verhältnismäßig niedrig bleibt (Kurve A). Bei hoher Hinterachslast ist aber mehr Energie auf die (Asphalt)-Strasse zu bringen. Deshalb kann der Bremsdruck des giermomentgeregelten Vorderrades bis zum Höchstdruck ansteigen (Kurve B), ohne daß der Fahrer Lenkschwierigkeiten bekommt.

Die Figur 4 läßt erkennen, daß der Bremszylinderdruck des rechten Vorderrades, da ja auf Eis läuft, gleichzeitig blockierschutzgeregelt auf einem niedrigen Niveau gehalten wird.

Am Ende der Blockierschutzregelung wird in den Figuren 1 bis 4 der Punkt St = Radstillstand erreicht.

In der Figur 5 ist der erfindungsgemäße Aufbau der Fahrzeugbremsanlage, dargestellt. Die Blockierschutzeinrichtung erfaßt die Geschwindigkeit der einzelnen Räder, an deren Innenseiten Im-pulsringe 2 befestigt sind. Diese umlaufenden Impulsringe erzeugen in den feststehenden Drehzahlfühlern 1 Impulse, deren Frequenz proportional der Raddrehzal ist. Aus der Drehzahländerung beim Bremsvorgang ermittelt ein Rechner in einem elektronischen Steuergerät 3 die Verzögerung, die Beschleunigung und den Bremsschlupf der Räder und errechnet aus diesen Werten den Bremsdruck, der zu einer größtmöglichen Abbremsung ohne Blockieren der Räder führt.

Das elektronische Steuergerät 3 steuert die Magnete der Drucksteuerventile 4. Hier wird der von einem Betriebsbremsventil 5 eingesteuerte Bremsdruck entsprechend von Vorgaben des elektronischen Steuergerätes 3 so geregelt, daß die in den Bremszylindern 6 erzeugte Spannkraft die Räder ohne blockieren optimal abbremst.

An der Hinterachse befindet sich ein Achslastgeber 7, der ein der jeweiligen Achslast entsprechendes Signal an das elektronische Steuergerät 3 abgibt. Dieses Signal wird dort ausgewertet und dann einem Giermomentabschwächer 8 als Steuergröße zugeführt. Auf diese Weise wird dann die Bremsdruckdifferenz zwischen den Bremszylindern 6 der beiden Fahrzeugseiten abhängig vom Achslastsignal des Achslastgebers 7 beeinflußt.

Der Achslastgeber 7 kann entweder unmittelbar mechanisch von den Bewegungen der Fahrzeughinterachse betätigt werden, es kann aber auch ein Potentiometergeber (bei metallgefederter Achse) oder ein Drucksensor (bei luftgefederter Achse) verwendet werden, die ein elektrisches Signal unmittelbar an das Steuergerät 3 liefern.

Die Begrenzung der Druckdifferenz zwischen den beiden Fahrzeugseiten erfolgt dann durch die Auswahl entsprechender Magnetventil-Ansteuerzeiten im Drucksteuerventil 4, so daß die Druckaufbau- bzw. Druckabbauimpulse abhängig von der Hinterachslast erzeugt werden.

Bei Systemen, die den Radbremszylinderdruck sensieren können, wird die Bremsdruckdifferenz zwischen den beiden Fahrzeugseiten direkt in Abhängigkeit vom Achslastsignal geregelt.

## Patentansprüche

1. Fahrzeugbremsanlage mit einer Blockierschutzeinrichtung mit elektronischem Steuergerät (3) zum Überwachen der Fahrbahnhaftung der Fahrzeugräder sowie mit einem Giermomentabschwächer (8), der bei stark unterschiedlichen Haftbeiwerten einen zu großen Bremsdruckunterschied auf den beiden Fahrzeugseiten verhindert, dadurch gekennzeichnet, daß das Fahrzeug mit einem an sich bekannten Achslastgeber (7) versehen ist und daß das Maß für die Achslast in dem elektronischen Steuergerät (3) auswertbar und dem Giermomentabschwächer (8) als Steuergräße zuführbar ist.

2. Fahrzeugbremsanlage nach Anspruch 1 mit Sensierung des Radbremszylinderdruckes, dadurch gekennzeichnet, daß die Bremsdruckdifferenz zwischen den Bremszylindern (6) der beiden Fahrzeugseiten abhängig vom Achslastsignal des Achslastgebers (7) beeinflußbar ist.

## Claims

1. Motor vehicle brake system having an antilocking device with electronic control unit (3) for monitoring the grip on the carriageway of the motor vehicle wheels and having a yawing moment reduction device (8) which, in the case of widely differing coefficients of friction, prevents too large a difference in braking pressure on the two sides of the motor vehicle, characterized in that the motor vehicle is provided with an axle load sensor (7) known per se, and in that the measure of the axle load can be evaluated in the electronic control unit (3) and fed to the yawing moment reduction device (8) as control variable.

2. Motor vehicle brake system according to Claim 1 with sensing of the wheel brake cylinder pressure, characterized in that the brake pressure difference between the brake cylinders (6) of the two sides of the motor vehicle can be influenced dependence on the axle load signal of the axle load sensor (7).

## Revendications

1. Installation de freinage pour véhicule avec un dispositif de protection contre le blocage, avec un appareil électronique de commande (3) pour surveiller l'adhérence sur la chaussée des roues du véhicule, ainsi qu'avec un affaiblisseur (8) du couple d'embardée, qui dans le cas de valeurs d'adhérence différant fortement, empêche une différence trop importante de la pression de freinage sur les deux côtés du véhicule, installation de freinage caractérisée en ce que le véhicule est muni d'un indicateur de charge d'essieu (7) connu en soi, et que la mesure pour la charge d'essieu est susceptible d'être exploitée dans l'appareil électronique de commande (3) et d'être appliquée en tant que grandeur de commande à l'affaiblisseur (8) du couple d'embardée.

2. Installation de freinage pour véhicule selon la revendication 1, avec détection de la pression des cylindres de freins de roues, installation caractérisée en ce que la différence de pression de freinage entre les cylindres de freinage (6) des deux côtés du véhicule, est susceptible d'être influencée en fonction du signal de charge d'essieu de l'indicateur de charge d'essieu (7).

FIG.1

FIG.2

FIG.3

FIG.4

FIG.5